# EUROPEAN PATENT APPLICATION

(11) **EP 4 020 685 A1**
(43) Date of publication of application: **29.06.2022**
(21) Application number: 21783707.9
(22) Date of filing: 04.02.2021
(51) Int. Cl.: H01M 50/20, H01M 50/502

(54) **BATTERY MODULE AND MANUFACTURING METHOD THEREOF**

(30) Priority: 09.04.2020 KR 20200043245
(71) Applicant: LG ENERGY SOLUTION, LTD., Seoul 07335 (KR)
(72) Inventor: LEE, Changhun, Daejeon 34122 (KR); SEONG, Junyeob, Daejeon 34122 (KR); PARK, Myungki, Daejeon 34122 (KR)
(74) Representative: Plasseraud IP
(86) International application number: PCT/KR2021/001480
(87) International publication number: WO 2021/206283

(57) **Abstract**

The present disclosure relates to a battery module for improving the quality of busbar frame, and a method for manufacturing the same. The battery module according to one embodiment of the present disclosure includes: a battery cell stack in which a plurality of battery cells are stacked, a module frame for housing the battery cell stack, and a busbar frame for covering the front and rear surfaces of the battery cell stack, wherein the busbar frame includes a first busbar frame and a second busbar frame coupled along a stacking direction of the battery cell stack, and wherein a protrusion part is formed on one side of the first busbar frame, a groove part is formed on one side of the second busbar frame, and the protrusion part is coupled to the groove part, so that the first busbar frame and the second busbar frame are connected.

## Description

### [TECHNICAL FIELD]

### Cross Citation with Related Application(s)

This application claims the benefit of Korean Patent Application No. 10-2020-0043245 filed on April 9, 2020 with the Korean Intellectual Property Office, the disclosure of which is incorporated herein by reference in its entirety.

The present disclosure relates to a battery module and a method for manufacturing the same, and more particularly, to a battery module for improving the quality of a busbar frame, and a method for manufacturing the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series or in parallel.

Meanwhile, when a plurality of battery cells are connected in series/parallel to configure a battery pack, a method of configuring a battery module composed of at least one battery cell and then adding other components to at least one battery module to configure a battery pack is common.

The battery module may include a battery cell stack in which a plurality of battery cells are stacked, a frame for housing the battery cell stack, and busbar frames for covering the front and rear surfaces of the battery cell stack.

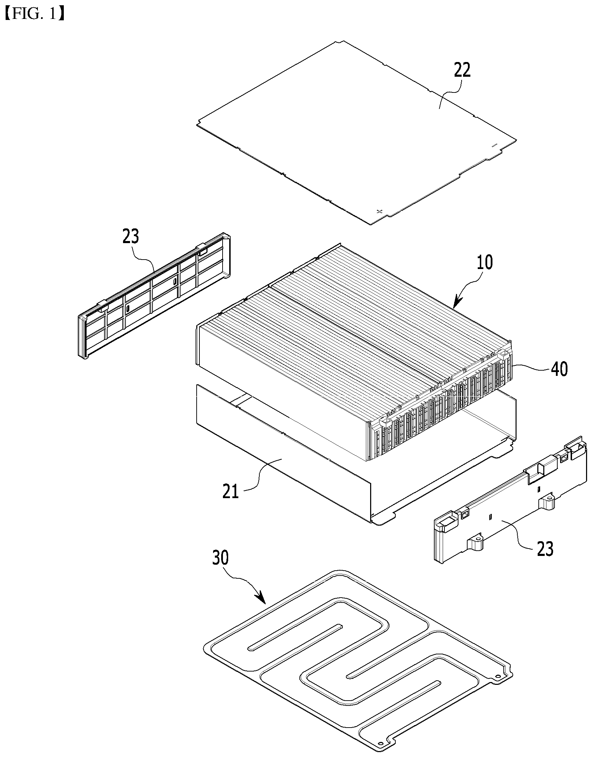

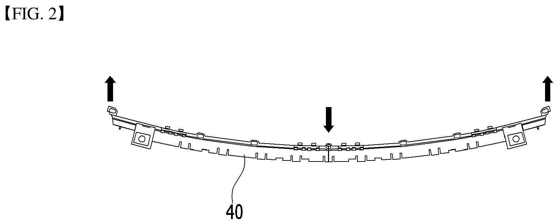

Fig. 1 is a diagram showing a battery module in which a busbar frame is formed according to the prior art. Fig. 2 is a diagram showing a warpage phenomenon during injection molding of a busbar frame according to the prior art.

Referring to Figs. 1 and 2, the conventional battery module may include a battery cell stack 10 in which a plurality of battery cells are stacked, a lower frame 21 for housing the battery cell stack 10, an upper plate 22 for covering the upper surface of the battery cell stack, end plates 23 for covering the front and rear surfaces of the battery cell stack, a heat sink 30 formed on the lower surface of the lower frame 21 to cool the battery cell stack 10, and a busbar frame 40 formed between the end plate 23 and the front and rear surfaces of the battery cell stack 10.

Conventionally, as shown in Fig. 1, as the number of stacked battery cells increases, it is inevitable to manufacture a busbar frame so that the width of the busbar frame becomes longer. However, as the length of the busbar frame in the width direction increases, it becomes difficult to control the mold when manufacturing the busbar frame by injection molding, and as shown in Fig. 2, pressure in opposite directions acts on the center and both sides of the busbar frame 40, causing a warpage phenomenon of the manufactured busbar frame.

### [DETAILED DESCRIPTION OF THE INVENTION]

### [Technical Problem]

It is an object of the present disclosure to provide a battery module in which a busbar frame having a structure for minimizing the warpage phenomenon of the busbar frame is formed.

The objects of the present disclosure are not limited to the aforementioned objects, and other objects which are not described herein should be clearly understood by those skilled in the art from the following detailed description.

### [Technical Solution]

In order to achieve the above object, one embodiment of the present disclosure provides a battery module comprising: a battery cell stack in which a plurality of battery cells are stacked, a module frame for housing the battery cell stack, and a busbar frame for covering the front and rear surfaces of the battery cell stack, wherein the busbar frame includes a first busbar frame and a second busbar frame coupled along a stacking direction of the battery cell stack, and wherein a protrusion part is formed on one side of the first busbar frame, a groove part is formed on one side of the second busbar frame, and the protrusion part is coupled to the groove part, so that the first busbar frame and the second busbar frame are connected.

Another embodiment of the present disclosure provides a method for manufacturing a battery module, the method comprising: a step of housing a battery cell stack in a module frame; a step of assembling the first busbar frame and the second busbar frame to form a busbar frame; and a step of assembling the busbar frame to the front and rear surfaces of the battery cell stack.

The protrusion part of the first busbar frame may include a first portion having a first width and a second portion having a second width, and the second width may be larger than the first width.

The groove part of the second busbar frame may include a first region having a first distance and a second region having a second distance, and the second distance may be wider than the first distance, the first portion may be inserted into the first region, and the second portion may be inserted into the second region.

The protrusion part of the first busbar frame and the groove part of the second busbar frame may be slidably coupled to each other.

In the step of assembling the first busbar frame and the second busbar frame, the protrusion part formed on one side of the first busbar frame may be slidably coupled to the groove part formed on one side of the second busbar frame.

Yet another embodiment of the present disclosure provides a battery pack comprising the battery module.

### [ADVANTAGEOUS EFFECTS]

According to embodiments of the present disclosure, the busbar frame can be formed by a method of assembling the first and second busbar frames, thereby providing effects such as reducing the molding costs, improving the quality of the busbar frame, and reducing the defective rate of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a battery module in which a busbar frame is formed according to the prior art;
Fig. 2 is a diagram showing a warpage phenomenon during injection molding of a busbar frame according to the prior art;
Fig. 3 is an exploded perspective view of a battery module according to an embodiment of the present disclosure;
Fig. 4 is a section taken along line A-A of Fig. 3 which is a diagram showing a structure in which first and second busbar frames are assembled;
Fig. 5 is an exploded view for explaining an assembly structure of the first and second busbar frames of Fig. 4;
Fig. 6 is a diagram showing a state in which a module frame and a heat sink are assembled to a battery cell stack according to an embodiment of the present disclosure;
Fig. 7 is a diagram showing a state in which first and second busbar frames are slidably coupled according to an embodiment of the present disclosure; and
Fig. 8 is a diagram showing a state in which the assembled busbar frame is assembled on the front surface of the battery cell stack according to an embodiment of the present disclosure.

### [DETAILED DESCRIPTION OF THE EMBODIMENTS]

It should be appreciated that the exemplary embodiments, which will be described below, are illustratively described to assist in the understand the present disclosure, and the present disclosure can be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

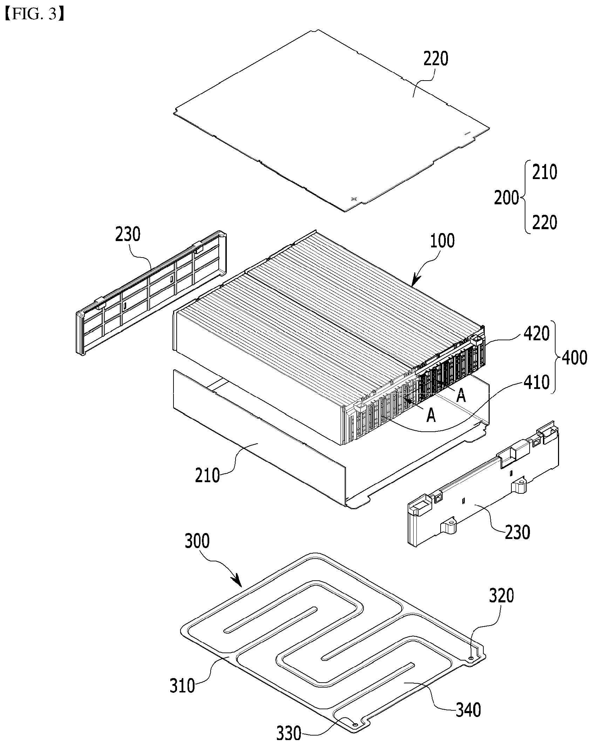

Hereinafter, the structure of a battery module including a busbar frame according to an embodiment of the present disclosure will be described with reference to Figs. 3 to 5.

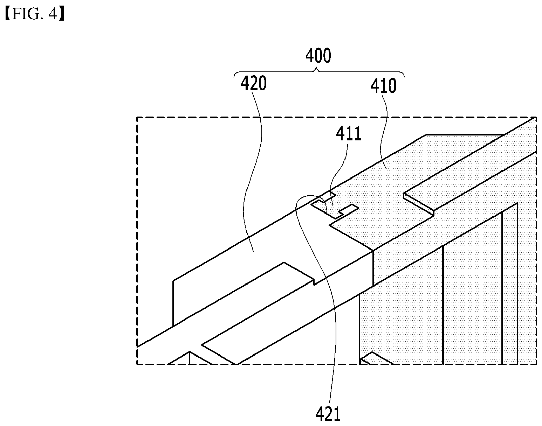

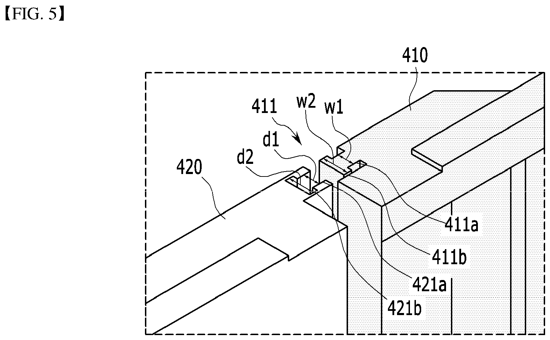

Fig. 3 is an exploded perspective view of a battery module according to an embodiment of the present disclosure. Fig. 4 is a section taken along line A-A of Fig. 3 which is a diagram showing a structure in which first and second busbar frames are assembled. Fig. 5 is an exploded view for explaining an assembly structure of the first and second busbar frames of Fig. 4.

Referring to Figs. 3 to 5, the battery module according to an embodiment of the present disclosure includes: a battery cell stack 100 in which a plurality of battery cells are stacked, a module frame 200 for housing the battery cell stack 100, and a busbar frame 400 for covering the front and rear surfaces of the battery cell stack 200, wherein the busbar frame 400 includes a first busbar frame 410 and a second busbar frame 420 coupled along a stacking direction of the battery cell stack 100, a protrusion part 411 is formed on one side of the first busbar frame 410, a groove part 421 is formed on one side of the second busbar frame 420, and the protrusion part 411 is coupled to the groove part 421, so that the first busbar frame 410 and the second busbar frame 420 are connected.

The battery cell according to the embodiment is a secondary battery and may be configured as a pouch-type secondary battery. Such a battery cell may be composed of a plurality of cells, and the plurality of battery cells may be stacked together so as to be electrically connected to each other, thereby forming the battery cell stack 100. Each of the plurality of battery cells may include an electrode assembly, a cell case, and an electrode lead protruding from the electrode assembly.

The module frame 200 houses the battery cell stack 100. According to an embodiment of the present disclosure, the module frame 200 may include a lower frame 210 for covering the lower surface and both side surfaces of the battery cell stack 100, and an upper plate 220 for covering the upper surface of the battery cell stack 100. However, the structure of the module frame 200 is not limited thereto, and may be a mono frame shape surrounded by four surfaces except the front and rear surfaces of the battery cell stack 100.

The battery module 200 according to the embodiment of the present disclosure may further include end plates 230 for covering the front and rear surfaces of the battery cell stack 100. The battery cell stack 100 housed inside can be physically protected through the module frame 200 described above.

The heat sink 300 may be formed on the bottom part of the module frame 200. The heat sink 300 may include a lower plate 310 forming a skeleton of the heat sink and contacting with the bottom part of the module frame 200, an inlet 320 formed on one side of the heat sink to supply a refrigerant from the outside to the inside of the heat sink, an outlet 330 formed on one side of the heat sink so that the refrigerant flowing inside the heat sink flows to the outside of the heat sink, and a flow passage part 340 that connects the inlet 320 and the outlet 330 and allows the refrigerant to flow.

According to an embodiment of the present disclosure, the flow passage part 340 may be formed such that a lower plate 310 in contact with the lower surface of the lower frame 210 corresponding to the bottom part of the module frame 200 is recessed downward. The upper side of the flow passage part 340 is opened, so that a flow passage is formed between the flow passage part 340 and the lower surface of the module frame 200, and a refrigerant can flow through the flow passage. That is, the battery module according to the embodiment of the present disclosure can have a cooling integrated structure in which the heat sink 300 is integrally formed on the bottom part of the module frame 200.

Conventionally, since a structure in which the refrigerant flows is separately formed on the lower side of the module frame, and the module frame has no choice but to cool indirectly, the cooling efficiency is reduced. Since a separate refrigerant flowing structure is formed, there is a problem that the space utilization rate on a battery module and a battery pack on which the battery module is mounted is lowered. However, according to an embodiment of the present disclosure, by adopting a structure in which the heat sink 300 is integrated on the lower surface of the module frame 200, the refrigerant can flow directly between the flow passage part 340 and the lower surface of the module frame 200, thereby increasing the cooling efficiency due to direct cooling, and through a structure in which the heat sink 300 is integrated with the lower surface of the module frame 200, the space utilization rate on a battery module and a battery pack on which the battery module is mounted can be further improved.

The busbar frame 400 may cover the front and rear surfaces of the battery cell stack 100. The busbar frame 400 according to an embodiment of the present disclosure includes a first busbar frame 410 and a second busbar frame 420 coupled along the stacking direction of the battery cell stack 100.

In the case of a large-area battery module in which the number of stacked battery cells increases significantly compared to the prior art, the busbar frame may increase in length along the stacking direction of the battery cell stack. As the length of the busbar frame increases, it becomes difficult to control the mold during injection molding of the bus bar frame, which causes a problem that the manufactured busbar frame is warped. If the busbar frame is warped, it may be difficult to assemble the busbar frame, which causes a problem that the quality of the overall battery module is deteriorated.

Thus, according to an embodiment of the present disclosure, the first and second busbar frames 410 and 420 arranged along the stacking direction of the battery cell stack 100 are separately manufactured, and then the first and second busbar frames 410 and 420 are mutually assembled and mounted on the battery cell stack 100, whereby the warpage phenomenon of the busbar frame during injection molding can be minimized, the molding costs for molding the busbar frame with a longer length can be reduced, the quality of the battery module can be secured and the defective rate can be reduced.

As shown in Figs. 4 and 5, a protrusion part 411 is formed on one side of the first busbar frame 410, a groove part 421 is formed on one side of the second busbar frame 420, and the protrusion part 411 is coupled to the groove part 421, so that the first busbar frame 410 and the second busbar frame 420 are connected. The protrusion part 411 of the first busbar frame 410 and the groove part 421 of the second busbar frame 420 may be slidably coupled to each other. As described above, through the protrusion-groove coupling structure between the first busbar frame 410 and the second busbar frame 420, the rigidity of the portion between the first busbar frame 410 and the second busbar frame 420 can be secured.

The protrusion part 411 of the first busbar frame 410 includes a first portion 411a having a first width w1 and a second portion 411b having a second width w2, and the second width w2 may be larger than the first width w1. The groove part 421 of the second busbar frame 420 includes a first region 421a having a first distance d1 and a second region 421b having a second distance d2, and the second distance d2 is wider than the first distance d1, the first portion 411a is inserted into the first region 421a, and the second portion 411b is inserted into the second region 421b.

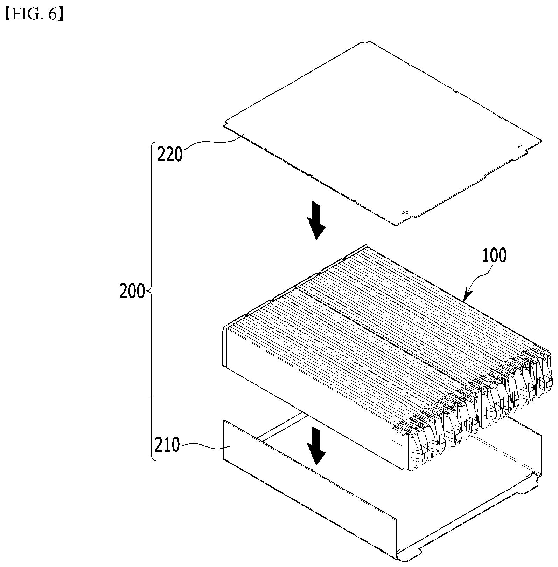

Hereinafter, a method for manufacturing a battery module including a busbar frame according to an embodiment of the present disclosure will be described with reference to Figs. 6 to 8.

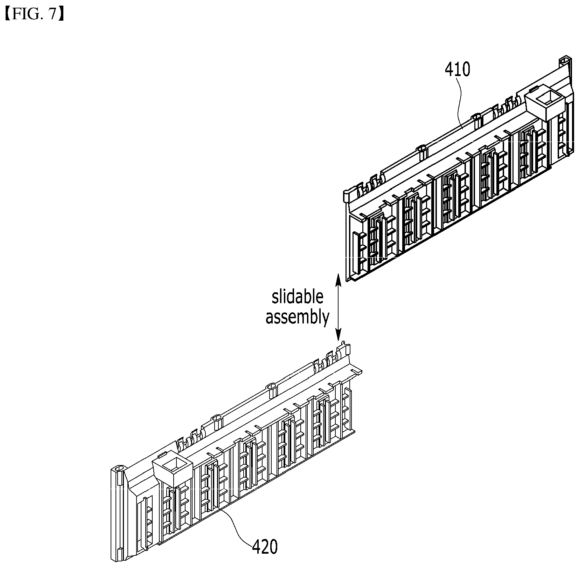

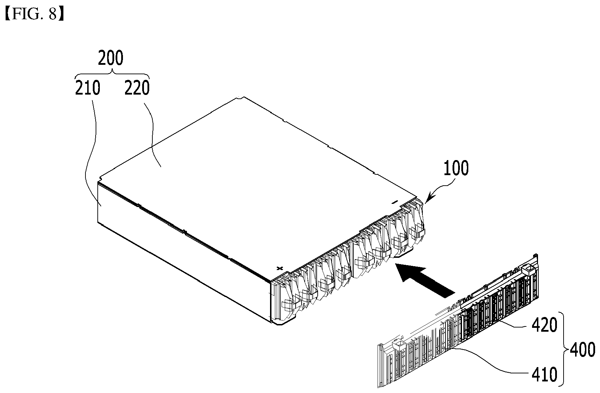

Fig. 6 is a diagram showing a state in which a module frame and a heat sink are assembled to a battery cell stack according to an embodiment of the present disclosure. Fig. 7 is a diagram showing a state in which first and second busbar frames are slidably coupled according to an embodiment of the present disclosure. Fig. 8 is a diagram showing a state in which the assembled busbar frame is assembled on the front surface of the battery cell stack according to an embodiment of the present disclosure.

Referring to Figs. 6 to 8, the method for manufacturing the battery module according to an embodiment of the present disclosure includes a step of housing a battery cell stack 100 in a module frame 200 (Fig. 6), a step of assembling the first busbar frame 410 and the second busbar frame 420 to form a busbar frame 400 (Fig. 7), and a step of assembling the busbar frame 400 to the front and rear surfaces of the battery cell stack 100 (Fig. 8).

In the step of housing a battery cell stack 100 in a module frame 200, it is possible to house the battery cell stack 100 the lower frame 210 forming the module frame 200, and assembling so as to cover the upper plate 220 on the upper surface of the battery cell stack 100, thereby housing the battery cell stack 100 in the module frame 200.

In the step of assembling the first busbar frame 410 and the second busbar frame 420, the protrusion part 411 formed on one side of the first busbar frame 410 can be slidably coupled to the groove part 421 formed on one side of the second busbar frame 420. Through the slidable coupling, coupling is formed in the entire section where the sliding first busbar frame 410 and second busbar frame 420 meet, so that the first busbar frame 410 and the second busbar frame 420 can be more firmly fastened.

The busbar frame 400 formed through the coupling of the first and second busbar frames 410 and 420 can be assembled to the front and rear surfaces of the battery cell stack 100. A state in which the busbar frame is assembled on the front surface of the battery cell stack 100 is illustrated in Fig. 8, but the busbar frame 400 can be similarly assembled even by the rear surface of the battery cell stack 100.

After the step of assembling the busbar frame 400 to the front and rear surfaces of the battery cell stack 100, the end plate 230 shown in Fig. 3 can be assembled to the outside of the reference bus bar frame 400 of the battery cell stack 100. In addition, the heat sink 300 shown in Fig. 3 can be mounted to the lower side of the lower frame 210.

The above-mentioned battery module can be included in the battery pack. The battery pack may have a structure in which one or more of the battery modules according to the present embodiment are gathered, and packed together with a battery management system (BMS) and a cooling device that control and manage battery's temperature, voltage, etc.

The battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described with reference to the preferred embodiments, the scope of the present disclosure is not limited thereto, and numerous other modifications and embodiments can be devised by those skilled in the art that will fall within the spirit and scope of the principles of the invention described in the appended claims. Further, these modified embodiments should not be understood individually from the technical spirit or perspective of the present disclosure.

### [Description of Reference Numerals]

100: battery cell stack
200: module frame
210: lower frame
220: upper plate
230: end plate
300: heat sink
400: busbar frame
410: first busbar frame
411: protrusion part
411a: first portion
w1: first width
411b: second portion
w2: second width
420: second busbar frame
421: groove part
421a: first region
d1: first distance
421b: second region
d2: second distance

## Claims

1. A battery module comprising:
a battery cell stack in which a plurality of battery cells are stacked,
a module frame for housing the battery cell stack, and
a busbar frame for covering the front and rear surfaces of the battery cell stack,
wherein the busbar frame includes a first busbar frame and a second busbar frame coupled along a stacking direction of the battery cell stack, and
wherein a protrusion part is formed on one side of the first busbar frame, a groove part is formed on one side of the second busbar frame, and the protrusion part is coupled to the groove part, so that the first busbar frame and the second busbar frame are connected.

2. The battery module of claim 1, wherein:
the protrusion part of the first busbar frame includes a first portion having a first width and a second portion having a second width, and the second width is larger than the first width.

3. The battery module of claim 2, wherein:
the groove part of the second busbar frame includes a first region having a first distance and a second region having a second distance, and the second distance is wider than the first distance,
the first portion is inserted into the first region, and the second portion is inserted into the second region.

4. The battery module of claim 1, wherein:
the protrusion part of the first busbar frame and the groove part of the second busbar frame are slidably coupled to each other.

5. A method for manufacturing a battery module, the method comprising:
a step of housing a battery cell stack in a module frame;
a step of assembling the first busbar frame and the second busbar frame to form a busbar frame; and
a step of assembling the busbar frame to the front and rear surfaces of the battery cell stack.

6. The method of claim 5, wherein:
in the step of assembling the first busbar frame and the second busbar frame, the protrusion part formed on one side of the first busbar frame is slidably coupled to the groove part formed on one side of the second busbar frame.

7. A battery pack comprising the battery module as set forth in claim 1.
